**Europäisches Patentamt**

**European Patent Office**

**Office européen des brevets**

(19)

(11) **EP 0 890 550 A1**

(12) **EUROPÄISCHE PATENTANMELDUNG**

(43) Veröffentlichungstag:
**13.01.1999 Patentblatt 1999/02**

(51) Int. Cl.$^6$: **C01F 11/18**

(21) Anmeldenummer: **98111493.7**

(22) Anmeldetag: **23.06.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.07.1997 AT 1168/97**

(71) Anmelder:
**UNITECHNIK-THURNER Anlagenbaugesellschaft mbH 3131 Reichersdorf (AT)**

(72) Erfinder: **Thurner, Siegfried 3131 Reichersdorf 123 (AT)**

(74) Vertreter:
**Puchberger, Rolf, Dipl. Ing. Patentanwaltskanzlei Dipl.-Ing. Rolf Puchberger, Dipl.-Ing. Peter Puchberger, Dipl.-Ing. Claudia Grabherr-Puchberger, Singerstrasse 13, Postfach 55 1010 Wien (AT)**

(54) **Vorrichtung zur, insbesondere kontinuierlichen, Herstellung von CaCO3 in dispergierter Form**

(57) Die Erfindung betrifft eine Vorrichtung zur, insbesondere kontinuierlichen, Herstellung von $CaCO_3$ in dispergierter Form, wobei die Vorrichtung wenigstens eine Zelle mit einer Slurryzufuhrleitung für $Ca(OH)_2$ in Wasser oder Gemisch $Ca(OH)_2/CaCO_3$ in Wasser und eine Gaszuführleitung für $CO_2$-Gas und eine Rührvorrichtung umfaßt, und die Slurryzufuhrleitung oberhalb des Rührers der Rührvorrichtung mündet, und wobei die Gaszufuhrleitung (8) eine von der Slurryzufuhrleitung (30) getrennte Zufuhrleitung ist, die in den Bereich des Rührers (5) mündet.

Fig.1

EP 0 890 550 A1

## Beschreibung

Die Erfindung betrifft eine Vorrichtung zur, insbesondere kontinuierlichen, Herstellung von $CaCO_3$ in dispergierter Form, wobei die Vorrichtung wenigstens eine Zelle mit einer Slurryzufuhrleitung für $Ca(OH)_2$ in Wasser oder Gemisch $Ca(OH)_2/CaCO_3$ in Wasser und eine Gaszufuhrleitung für $CO_2$-Gas und eine Rührvorrichtung umfaßt, und die Slurryzufuhrleitung oberhalb des Rührers der Rührvorrichtung einmündet.

In der industriellen Praxis werden derzeit Vorrichtungen zur Herstellung von $CaCO_3$-Dispersionen verwendet, die diskontinuierlich arbeiten. Bereits vorgeschlagene Vorrichtungen zur kontinuierlichen Herstellung von $CaCO_3$, wie in der AT 000 954 U geoffenbart, konnten den gestellten Anforderungen nicht entsprechen. Die gemeinsame Führung der Rührwelle und des Rauchgases durch ein Zentralrohr und die zusätzliche Anordnung eines Mantelrohres für die Slurryumwälzung sind apparativ und verfahrensmäßig ungünstig. Ziel der vorliegenden Erfindung ist es, eine in der Praxis einsetzbare Vorrichtung zur kontinuierlichen Herstellung zu schaffen, die die Nachteile der bisherigen Anordnungen vermeidet, aber auch diskontinuierlich arbeiten kann.

Insbesondere bedarf es zur Erzielung einer hohen und qualitativ guten Ausbeute der gründlichen Zirkulation der Slurry in der Zelle mit guter Durchmischung der Slurry mit dem eingeleiteten $CO_2$-Gas, wie z.B. der AT E 114 143 T1 zu entnehmen ist.

Die vorliegende Erfindung ist dadurch gekennzeichnet, daß die Gaszufuhrleitung eine von der Slurryzufuhrleitung getrennte Zufuhrleitung ist, die in den Bereich des Rührers mündet. Nach weiteren Merkmalen der Erfindung ist die Gaszufuhrleitung im Bereich des Rührers ringförmig ausgebildet. Bevorzugt umfaßt die Gaszufuhrleitung zwei Ringrohre, zwischen denen der Rührer angeordnet ist. Weiters ist der Rührer (Dispergierorgan) bevorzugt als Scheibenrührer oder Zahnscheibe ausgebildet. Nach einem weiteren Merkmal der Erfindung ist mittig oberhalb der Ringrohre ein vertikales Zirkulationsrohr vorgesehen, das unterhalb des Slurryspiegels in der Zelle offen endet und in welches seitlich die Slurryzufuhrleitung mündet. Das Zirkulationsrohr kann innen die Rührerwelle aufnehmen. Bevorzugt werden derartige Zellen mehrfach hintereinander geschaltet, wobei die Slurryzufuhrleitung, jeweils von der vorausgehenden Zelle am Slurryspiegel oder knapp unterhalb ausgehend, über einen Fallrohrbereich in das Zirkulationsrohr seitlich einmündet. Die Gaszufuhrleitung ist bevorzugt entlang der Seitenwand der Zelle nach unten geführt und Rohrarme führen zu den Ringrohren der Zelle.

Weitere vorteilhafte Merkmale sind den Patentansprüchen, den Zeichnungen und der nachfolgenden Beschreibung zu entnehmen.

Im folgenden wird die Erfindung anhand der Zeichnungen in einem Ausführungsbeispiel näher erläutert.

Die Fig. 1 ist schematisch ein vertikaler Längsschnitt durch eine Anordnung von drei hintereinander geschalteten Zellen, wobei der besseren Darstellung wegen die Gaszufuhrleitungen in gleicher vertikaler Ebene dargestellt sind, wie die Slurryzufuhrleitungen.

Die Fig. 2 zeigt einen Horizontalschnitt nach der Linie II-II in Fig. 1, wobei jedoch die Gaszufuhrleitungen und die Slurryzufuhrleitungen in einem Winkel von 90° zueinander versetzt angeordnet sind. Die Fig. 3 ist ein Schnitt nach der Linie III-III in Fig. 2.

Dargestellt ist eine Anlage mit drei hintereinander geschalteten Zellen 1, die gemeinsam in einer Wasserwanne 2 stehen. Jede Zelle 1 umfaßt ein Rührwerk 3 mit einer Rührwelle 4 und an deren unterem Ende einem Rührer 5 als Dispergierorgan.

Oberhalb und unterhalb des Rührers 5 liegen die Gasauslässe in Form von Ringrohren 7. Das $CO_2$-Gas gelangt über die Gaszufuhrleitung 8 entlang der Seitenwand der Zelle 1 zu zwei Rohrarmen 9, an deren Enden die Ringrohre 7 angeordnet sind.

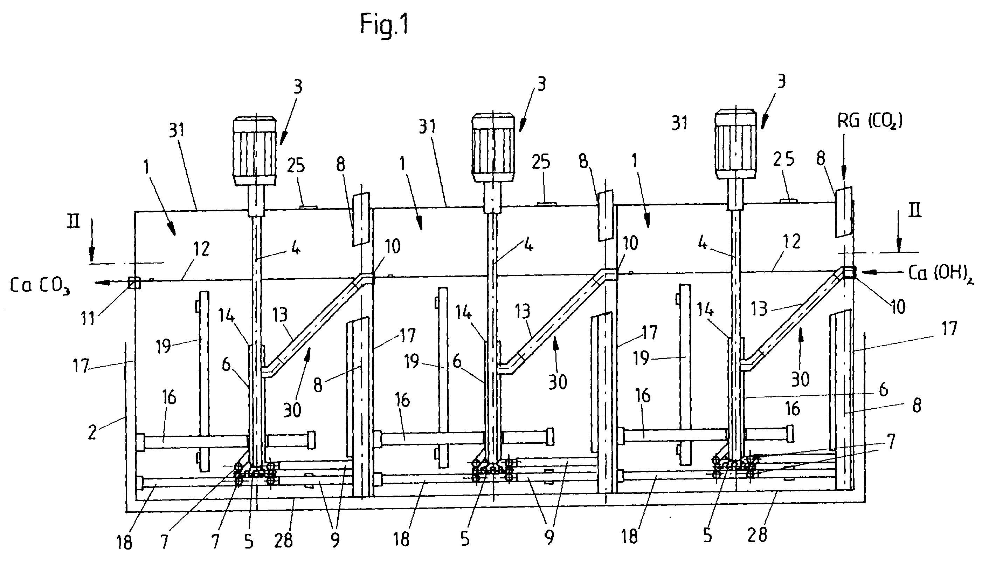

Die Zufuhr der Kalkmilch ($Ca(OH)_2$ + Wasser) erfolgt in Fig. 1 von rechts über den Einlauf 10 und die $CaCO_3$ Dispersion wird über den Auslauf 11 links abgezogen. Der sich in den Zellen einstellende Slurryspiegel ist mit 12 bezeichnet.

Die Führung des Slurrys in jeder Zelle ist derart, daß über eine Slurryzufuhrleitung 30 der Slurry vom Einlauf 10 im Bereich des Slurryspiegels 12 einströmt, über einen Fallrohrbereich 13 der Slurryzufuhrleitung nach unten strömt und in ein vertikal stehendes Zirkulationsrohr 6 einströmt, welches mit seinem oberen Ende 14 unterhalb des Slurryspiegels 12 liegt, und dessen unteres Ende 15 im Bereich oder oberhalb des oberen Ringrohres 7 liegt.

Die Streben 16 dienen der Befestigung des Zirkulationsrohres 6 gegenüber der Seitenwand 17 der Zelle. Die Streben 18 fixieren die Ringrohre 7.

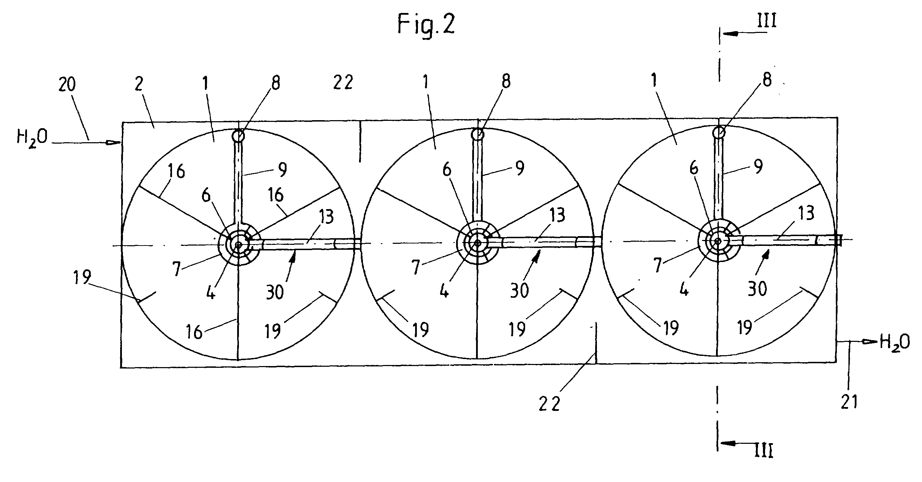

Wie der Fig. 2 zu entnehmen ist, sind die Zellen 1 mit zylinderförmigen Seitenwänden 17 und dem Boden 28 ausgebildet. Leitbleche 19 dienen der besseren Durchmischung des Slurry. Die Gaszufuhrleitung 8 und die Rohrarme 9 sind gegenüber der Slurryzufuhrleitung um 90° versetzt (anders als in Fig. 1 dargestellt). Die Wasserwanne 2 hat einfache rechteckige Form und mit dem Bezugszeichen 20,21 ist der Wassereinlauf und Wasserauslauf für das Kühlwasser eingezeichnet. Strömbleche 22 dienen der Strömungssteuerung für das Kühlwasser.

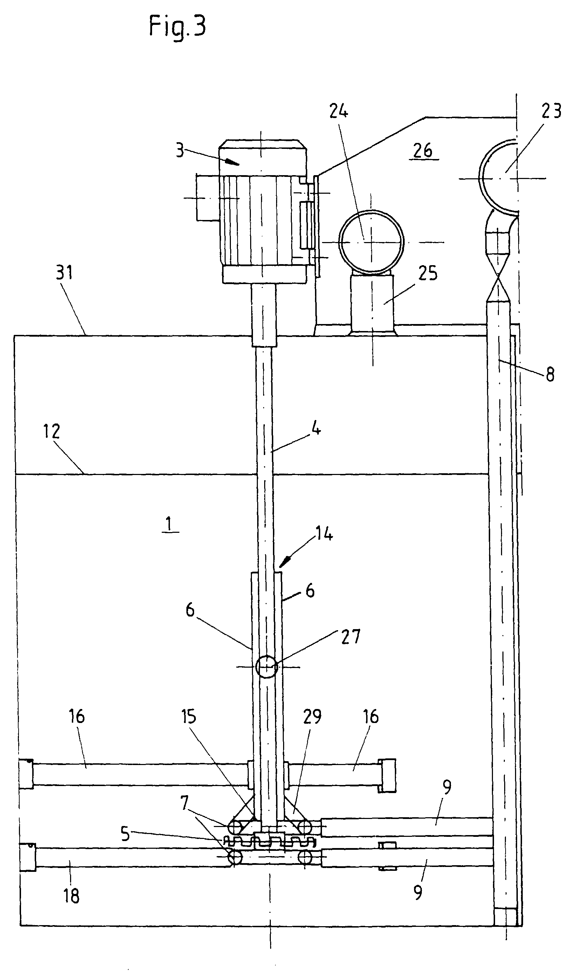

Der Fig. 3 ist vergrößert ein Schnitt durch eine Zelle nach der Linie III-III in Fig. 2 zu entnehmen.

Über die Hauptgasleitung 23 gelangt das $CO_2$ in die Gaszufuhrleitung 8. Über das Entlüftungsrohr 24 und Entlüftungsstutzen 25 kann jede Zelle entlüftet oder belüftet werden.

Das Rührwerk 3 sitzt an einer Trägerkonstruktion 26 und ist damit statisch unabhängig von der Zelle.

Die Rührerwelle 4 ist bevorzugt eine polierte Vollwelle und ragt durch das Zirkulationsrohr 6 nach unten.

Der Durchmesser des Zirkulationsrohres 6 ist derart bemessen, daß zufolge einer Ansaugwirkung des Rührers 5 der Slurry aus der Zelle von oben in den ringförmigen Spalt bei dem oberen Ende 14 eingesaugt, mit dem Slurry von der vorhergehenden Zelle oder der frisch einströmenden Kalkmilch (durch die Öffnung 27) vermischt wird, und der Slurry tritt unten im Bereich der der Begasung dienenden Ringrohre 7 oberhalb des Rührers 5 durch den Endbereich 15 wieder aus.

Die beschriebene Anlage zur Karbonisierung von Kalkmilch arbeitet nach der bekannten Formel

$$Ca(OH)_2 + CO_2 \leftrightarrow CaCO_3 + H_2O$$

Bevorzugt werden runde Zellen verwendet, die beispielsweise einen Mindestinhalt von 900 Liter haben. Jede Zelle kann mit einem geteilten Deckel 31 versehen sein. Im feststehenden Teil des Deckels sitzt ein Entlüftungsstutzen 25 zur Absaugung der Abluft. Die andere Hälfte des Deckels kann für Kontroll- und Wartungsarbeiten abnehmbar sein. Die Deckel sind mit den Zellen bevorzugt gasdicht verbunden.

Die Zellen können zu Einheiten mit beliebiger Zellenanzahl zusammengestellt werden. Die in der Zeichnung dargestellte Wasserwanne stellt einen geschlossenen und drucklosen Behälter dar, der bevorzugt trapezförmig versteifte Wände aufweist und zur Abkühlung oder Aufheizen des Wassers dient, um die erforderliche Zellentemperatur - gemäß den Anforderungen des zu erzeugenden Kristalles - zu erreichen. Die Kühl-/Warmwassermenge und deren Ein- und Austemperatur sind den Anforderungen entsprechend zu regeln.

Als Auffangwanne für die Aufnahme des Inhaltes der Zellen bei Entleerung bzw. des Waschwassers können zusätzlich Wannen vorgesehen sein (zeichnerisch nicht dargestellt), um den Sicherheitsrichtlinien (WHG) zu entsprechen. Die Wannen können z.B. auch aus Beton sein.

Die Rührwerke 3 einer Anlage sind an einer durchgehenden Trägerkonstruktion 26 montiert. Die Stabilität dieser Konstruktion wird durch Einbeziehung der Hauptgasleitung 23 und der Rohre zur Abführung der Abluft erhöht. Zwischen der Trägerkonstruktion bzw. dem Rührwerk 3 und den Zelleneinheiten können flexible Verbindungen vorgesehen werden, wodurch eventuelle Vibrationen des Rührwerks nicht auf die Zellen übertragen werden.

Beispielsweise umfaßt jedes Rührwerk 3 einen Normmotor Bauform V5 (DIN 42950) entsprechend der Norm IMV5 (IEC 34-5). Die Rührerwelle 4 ist bevorzugt eine polierte Vollwelle. Das Dispergierorgan bzw. Rührer 5 ist bevozugt in Form eines Scheibenrührers oder einer Zahnscheibe ausgebildet. Dieses Dispergierorgan wird mit hoher Umfangsgeschwindigkeit betrieben und gewährleistet so nicht nur eine wirkungsvolle Dispergierung, sondern ist auch in der Lage, im Slurry eventuell vorhandene Agglomerate aufzuschlagen.

Beim Zirkulationsrohr 6 ist wesentlich, daß es zur Gänze unter dem Slurryspiegel 12 liegt, nach oben und nach unten für die Zirkulation offen und unabhängig vom Rührwerk ist. Gegenüber den Ringrohren 7 ist das Zirkulationsrohr durch drei Stützen 29 zentrisch in der Zelle gehalten.

Die $CO_2$-Gaszufuhr erfolgt, wie beschrieben, über die Ringrohre 7 ober- und unterhalb der Dispergierzahnscheibe. Der Gasaustritt erfolgt durch Bohrungen des Ringrohres. Die Rohrarme 9 können flexible Verbindugnsschläuche sein, die zur fest installierten Gaszufuhrleitung 8 reichen.

Das $CO_2$-Gas ist bevorzugt ein Rauchgas als Abgas von Verbrennungsanlagen. Diese können Kesselanlagen, Schachtöfen, Drehrohröfen etc. sein. Als Brennstoffe kommen alle brennbaren Stoffe mit $CO_2$-Bindung in Frage. In vielen Fällen, beispielsweise zur Herstellung von Kalziumkarbonat als Weißpigment, wird eine entsprechende Reinigung des Rauchgases nötig sein, z.B. durch eine Wasch- und Kühlanlage. Bevorzugt werden Rauchgaswäscher mit Kaltwasser als Waschflüssigkeit eingesetzt, wobei Mit- und/oder Gegenstromwäscher mit kleinstem Wasserbedarf verwendet werden können. Der für die Anlage erforderliche Gasdruck kann durch einen oder mehrere Saugzugventilatoren erreicht werden. Die für die Karbonisierung erforderliche Gasmenge wird vor jeder Zelleneinheit über Durchflußmesser und Stellventile geregelt. Die Gaszufuhr zu jeder einzelnen Zelle kann durch Handventile eingeschaltet oder abgeschaltet werden.

Die Karbonisierung erfolgt mit Kalziumhydrat. Aus wirtschaftlichen Gründen kann es vorteilhaft sein, die Kalkmilch in einer Löschanlage aus Kalkoxid und Wasser herzustellen. Durch die Wahl der Kalklöschanlage kann die Reaktionsfreudigkeit des Hydrates stark beeinflußt werden. Vorteilhaft ist die Verwendung des Intensivlöschverfahrens, bei dem Feinkalk (CaO) mit heißer Kalkmilch gelöscht und dabei eine sehr feinteilige Kalkhydratsuspension hergestellt wird. Nach einer ersten Siebung und Einstellung der gewünschten Konzentration über Dichtetransmitter und Wasserstellventil, kann die Suspension in einen oder mehrere Arbeitsbehälter in Abhängigkeit von der Produktionsmenge und der gewünschten Karbonatqualität wie Kristallform und Korngrößenverteilung gelagert werden. Mittelsfrequenzgeregelter Verdrängerpumpen und Durchflußmesser wird die Suspension in die Zellen der Anlage gefördert.

Die Karbonisierung in der Zelle erfolgt durch Dispergieren des eingeleiteten Rauchgases in der Suspension. Die Fällung ist theoretisch spontan, was jedoch mechanisch zumeist nicht erreicht wird. Es ist erforderlich, das Rauchgas in kleinstmögliche Bläschen mit maximaler Oberfläche zu zerteilen, was durch das Dispergierorgan optimal erfolgen kann. Durch die Anordnung der Ringrohre für das Rauchgas oberhalb und unterhalb der Dispergierzahnscheibe wird die Wirkung stark erhöht, etwa auf das Doppelte. Durch die Zirkulation der Suspension mittels des Zirkulationsrohres verlängert sich die Verweilzeit in der Zelle, wodurch die Reaktion verstärkt wird.

Zur Messung der Vollständigkeit der Karbonatreaktion kann am Ende jeder Einheit eine pH Wert Messung erfolgen. Weiters kann jeder Einheit ein Feinsieb nachgeschaltet werden, um die $CaCO_3$ - Suspension zu sieben und einem Vorratsbehälter zuzuleiten.

Wie gesagt, dient die erfindungsgemäße Anlage der kontinuierlichen Karbonisierung, die Anlage kann aber auch chargenweise betrieben werden.

Die $CaCO_3$-Suspension kann auf üblichen Wegen weiterbehandelt werden. So kann zB. durch ein Entwässerungsverfahren mit Hilfe von Vakuumfilter oder Filterpressen oder dergleichen die relativ nieder konzentrierte Karbonatsuspension bis zu 70% eingedickt, mit Dispergiermittel verflüssigt und als konzentrierter Slurry der Verwendung zugeführt werden. Eine weitere Möglichkeit besteht in der Trocknung des eingedickten Kuchens und Abfüllung als Pulver in Säcke oder Behälter.

**Patentansprüche**

1. Vorrichtung zur, insbesondere kontinuierlichen, Herstellung von $CaCO_3$ in dispergierten Form, wobei die Vorrichtung wenigstens eine Zelle mit einer Slurryzufuhrleitung für $Ca(OH)_2$ in Wasser oder Gemisch $Ca(OH)_2$/$CaCO_3$ in Wasser und eine Gaszufuhrleitung für $CO_2$-Gas und eine Rührvorrichtung umfaßt, und die Slurryzufuhrleitung oberhalb des Rührers der Rührvorrichtung mündet, dadurch gekennzeichnet, daß die Gaszufuhrleitung (8) eine von der Slurryzufuhrleitung (30) getrennte Zufuhrleitung ist, die in den Bereich des Rührers (5) mündet.

2. Vorrichtung nach Anspruch 1, dadurch gekennzeichnet, daß die Gaszufuhrleitung (8) im Bereich des Rührers (5) ringförmig ausgebildet ist.

3. Vorrichtung nach Anspruch 2, dadurch gekennzeichnet, daß die Gaszufuhrleitung (8) zwei Ringrohre (7) umfaßt, zwischen denen der Rührer (5) angeordnet ist.

4. Vorrichtung nach einem der vorhergehenden Ansprüche 1 bis 3, dadurch gekennzeichnet, daß der Rührer (5) dem jeweiligen Verwendungszweck entsprechend mit einem Scheibenrührer oder einer Zahnscheibe ausgestattet ist.

5. Vorrichtung nach einem der vorhergehenden Ansprüche, dadurch gekennzeichnet, daß mittig oberhalb der Ringrohre (7) ein vertikales Zirkulationsrohr (6) vorgesehen ist, das unterhalb des Slurryspiegels (12) in der Zelle (1) offen endet und in welches seitlich die Slurryzufuhrleitung (30) mündet.

6. Vorrichtung nach Anspruch 5, dadurch gekennzeichnet, daß das Zirkulationsrohr (7) innen die Rührerwelle (4) auf-nimmt.

7. Vorrichtung nach Anspruch 5 oder 6, dadurch gekennzeichnet, daß das Zirkulationsrohr (7) durch Streben (16) mit der Seitenwand (17) der Zelle (1) und mit dem oberen Ringrohr (7) verbunden ist.

8. Vorrichtung nach einem der vorhergehenden Ansprüche, dadurch gekennzeichnet, daß die Zelle (1) durch eine zylinderförmige Seitenwand (17) und einen Boden (28) gebildet ist, sowie einen gasdichten Deckel (31) aufweist.

9. Vorrichtung nach einem der vorhergehenden Ansprüche, dadurch gekennzeichnet, daß ein oder mehrere Zellen (1) in einer Wasserwanne (2) angeordnet sind, welche Kühlwasser aufnimmt.

10. Vorrichtung nach einem der vorhergehenden Ansprüche, dadurch gekennzeichnet, daß in an sich bekannter Weise mehrere Zellen (1) hintereinander geschaltet sind, wobei die Slurryzufuhrleitung (30) jeweils von der vorausgehenden Zelle am Slurryspiegel oder knapp unterhalb ausgehend über einen Fallrohrbereich (13) in das Zirkulationsrohr (7) seitlich einmündet.

11. Vorrichtung nach einem der vorhergehenden Ansprüche, dadurch gekennzeichnet, daß die Gaszufuhrleitung (8) entlang der Seitenwand (1) der Zelle (1) nach unten geführt ist und Rohrarme (9) zu dem/den Ringrohr(en) (7) geführt sind.

Fig.1

# Fig.2

EP 0 890 550 A1

## Fig.3

**EP 0 890 550 A1**

**Europäisches Patentamt**

**EUROPÄISCHER RECHERCHENBERICHT**

Nummer der Anmeldung

EP 98 11 1493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE 296 16 498 U (UNITECHNIK-THURNER) 27. Februar 1997 * das ganze Dokument * --- | 1,2,4-11 | C01F11/18 |
| Y | WO 97 13723 A (JAMES W BUNGER AND ASSOCIATES) 17. April 1997 * Seite 10, Zeile 25 - Zeile 27; Ansprüche; Abbildung 2 * --- | 1,2,4-11 | |
| Y | US 2 964 382 A (HALL) 13. Dezember 1960 * das ganze Dokument * --- | 1,2,4-11 | |
| A | US 2 058 503 A (RAFTON) 27. Oktober 1936 ----- | | |

RECHERCHIERTE SACHGEBIETE (Int.Cl.6)

C01F

Der vorliegende Recherchenbericht wurde für alle Patentansprüche erstellt

| Recherchenort | Abschlußdatum der Recherche | Prüfer |
|---|---|---|
| DEN HAAG | 6. Oktober 1998 | Zalm, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument